(19) Europäisches Patentamt / European Patent Office / Office européen des brevets

(11) **EP 2 691 204 B1**

(12) **EUROPEAN PATENT SPECIFICATION**

(45) Date of publication and mention of the grant of the patent:
**16.01.2019 Bulletin 2019/03**

(21) Application number: **12714455.8**

(22) Date of filing: **29.03.2012**

(51) Int Cl.:
**B23K 9/095** (2006.01)

(86) International application number:
**PCT/US2012/031180**

(87) International publication number:
**WO 2012/135479 (04.10.2012 Gazette 2012/40)**

(54) **WELDING ELECTRODE STICKOUT MONITORING AND CONTROL**

ÜBERWACHUNG UND STEUERUNG DER FREIEN DRAHTLÄNGE EINER SCHWEISSELEKTRODE

SURVEILLANCE ET COMMANDE DE LA LONGUEUR DE SORTIE D' UNE ÉLECTRODE DE SOUDAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2011 US 201161468826 P**
**09.11.2011 US 201161557808 P**
**28.03.2012 US 201213433026**

(43) Date of publication of application:
**05.02.2014 Bulletin 2014/06**

(73) Proprietor: **Illinois Tool Works Inc.**
**Glenview, IL 60025 (US)**

(72) Inventors:
• **HUTCHISON, Richard Martin**
**Glenview, Illinois 60026 (US)**
• **UECKER, James Lee**
**Glenview, Illinois 60026 (US)**
• **HOLVERSON, Todd Earl**
**Glenview, Illinois 60026 (US)**
• **FROLAND, Knut Norman**
**Glenview, Illinois 60026 (US)**
• **O'DELL, Michael J.**
**Glenview, Illinois 60026 (US)**
• **PULS, Kenneth J.**
**Glenview, Illinois 60026 (US)**
• **DAVIDSON, Robert R.**
**Glenview, Illinois 60026 (US)**
• **SCHUH, Richard**
**Glenview, Illinois 60026 (US)**

(74) Representative: **Trinks, Ole et al**
**Meissner Bolte Patentanwälte**
**Rechtsanwälte Partnerschaft mbB**
**Postfach 10 26 05**
**86016 Augsburg (DE)**

(56) References cited:
**EP-A1- 2 000 246**    **EP-A2- 1 036 627**
**JP-A- 5 031 580**    **US-A- 5 270 516**

**Description**

BACKGROUND

The invention relates generally to welding systems and a welding method as defined in the preamble of claims 1 and 10.

Such a system and method is known from EP 1036627 A2. The system determines a stickout of the electrode and controls current based on the stickout.

A wide range of welding systems and welding control regimes have been implemented for various purposes. In continuous welding operations, metal inert gas (MIG) techniques allow for formation of a continuing weld bead by feeding welding wire shielded by inert gas from a welding torch. Electrical power is applied to the welding wire and a circuit is completed through the workpiece to sustain an arc that melts the wire and the workpiece to form the desired weld. Certain related processes do not use shielding gas, and may rely upon constituents in the welding wire for forming and protecting the progressing weld.

In its various forms, MIG welding involves application of controlled voltages and currents to a welding wire that forms an electrode and is advanced towards a workpiece to create an arc between the electrode and the workpiece. The wire electrode is typically fed by a wire feeder coupled to a welding power supply, although in some systems, the wire feeder may be integrated into the power supply, or wire may be fed by a welding torch (e.g., "spoolgun"). In general, the welding torch may be held and controlled by a human operator, or may be part of an automated system, typically manipulated by a robotic device. Welding parameters may be set for all of these processes, including current and voltage levels, wire feed speeds, and so forth. For manual applications, travel speed (the rate of advancement of the torch to create the weld) is regulated by the operator, while in automated applications, this may be set in advance for particular welds and workpieces.

A continuing issue in MIG and related welding processes is variability in the extension of the welding electrode from the structure supporting it in the welding torch. This length, sometimes referred to as "stickout" is necessary to allow the electrode to extend past the surrounding gas nozzle for welding, and to avoid excessive spatter and wear of the contact tip within the nozzle. At the same time, incorrect stickout can lead to degradation in welds, increased spatter, reduced contact tip life, and other unwanted effects. Moreover, variability in the stickout between welds can result in non-uniformity in part quality, particularly in automated applications.

There is a need, therefore, for improved techniques for measuring or estimating stickout, and for using the measured or estimated stickout for monitoring and/or control of the welding wire or welding operation.

BRIEF DESCRIPTION

The present invention provides welding systems designed to respond to such needs. In accordance with an exemplary implementation, a welding system comprises a sensor configured to sense a welding parameter; processing circuitry configured to determine a length of a stickout of a welding electrode wire from a welding torch based upon the sensed welding parameter, wherein the processing circuitry is configured to evaluate and store an evaluation of a performance of the welding system or a weld based on the length of the stickout; and a component configured to control an operation of the welding system based upon the determined length of the stickout, wherein the sensor comprises a current sensor that detects welding current, and wherein the length of the stickout is determined, based upon sensed current, and wherein the length of the stickout is determined by a first relationship if the welding electrode wire is in a short condition, and by a second relationship if the welding electrode wire is in an arc condition. The processing circuitry, in operation, determines the amount of the welding electrode wire to retract based at least in part on the determined length of stickout from the welding torch after welding, the retraction following the welding operation, wherein the welding electrode wire is retracted to approximately the level of the nozzle front extremity or slightly within the nozzle of the welding torch; and wherein the processing circuitry commands the amount of the welding electrode wire to retract after a delay after welding to allow for repetitive welding starts.

The invention also provides a welding method that includes sensing welding current during welding; determining, based upon the welding current, length of a stickout of a welding electrode wire from a welding torch based upon the sensed welding current; logging the length of the stickout during welding and/or controlling an operation of the welding system based upon the determined length of the stickout; and evaluating and storing an evaluation of a performance of the welding system or a weld based on the length of the stickout, and wherein the length of the stickout is determined by a first relationship if the welding electrode wire is in a short condition, and by a second relationship if the welding electrode wire is in an arc condition. The method further comprises determining the amount of the welding electrode wire to retract based at least in part on the determined length of stickout from the welding torch after welding, the retraction following the welding operation, wherein the welding electrode wire is retracted to approximately the level of the nozzle front extremity or slightly within the nozzle of the welding torch; and retracting the amount of the welding electrode wire after a delay after welding to allow for repetitive welding starts.

DRAWINGS

FIG. 1 is a diagrammatical representation of an exemplary MIG welding system illustrating a power supply coupled to a wire feeder for performing pulsed welding operations in accordance with aspects of the present techniques;

FIG. 2 is a partially broken view of an exemplary welding torch with the wire electrode protruding from the torch while preforming a welding operation;

FIG. 3 is a similar view of the welding torch with the wire retracted within the nozzle following the welding operation;

FIG. 4 is a flow chart illustrating exemplary steps in the measurement or estimation of stickout based upon welding parameters;

FIG. 5 is a flow chart illustrating exemplary monitoring and control options that may be implemented based upon stickout measurement or estimation; and

FIG. 6 is a diagrammatical representation of certain of the functional components of a welding system that may be involved in implementing the monitoring and control options of FIG. 5.

DETAILED DESCRIPTION

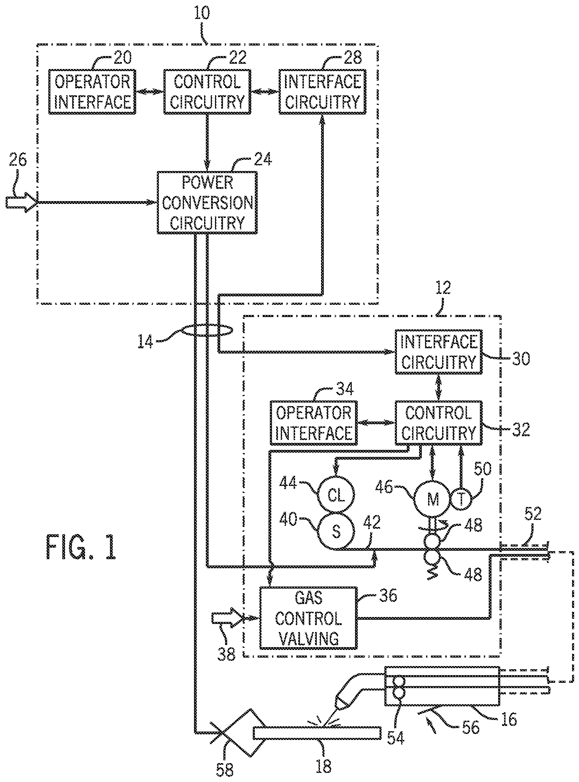

Turning now to the drawings, and referring first to FIG. 1, an exemplary welding system is illustrated as including a power supply 10 and a wire feeder 12 coupled to one another via conductors or conduits 14. In the illustrated embodiment the power supply 10 is separate from the wire feeder 12, such that the wire feeder may be positioned at some distance from the power supply near a welding location. However, it should be understood that the wire feeder, in some implementations, may be integral with the power supply. In such cases, the conduits 14 would be internal to the system. In embodiments in which the wire feeder is separate from the power supply, terminals are typically provided on the power supply and on the wire feeder to allow the conductors or conduits to be coupled to the systems so as to allow for power and gas to be provided to the wire feeder from the power supply, and to allow data to be exchanged between the two devices.

The system is designed to provide wire, power and shielding gas to a welding torch 16. As will be appreciated by those skilled in the art, the welding torch may be of many different types, and typically allows for the feed of a welding wire and gas to a location adjacent to a workpiece 18 where a weld is to be formed to join two or more pieces of metal. A second conductor is typically run to the welding workpiece so as to complete an electrical circuit between the power supply and the workpiece.

The system is designed to allow for data settings to be selected by the operator, particularly via an operator interface 20 provided on the power supply. The operator interface will typically be incorporated into a front faceplate of the power supply, and may allow for selection of settings such as the weld process, the type of wire to be used, voltage and current settings, and so forth. In particular, the system is designed to allow for MIG welding with various steels, aluminums, or other welding wire that is channeled through the torch. These weld settings are communicated to control circuitry 22 within the power supply.

The control circuitry, described in greater detail below, operates to control generation of welding power output that is applied to the welding wire for carrying out the desired welding operation. In certain presently contemplated embodiments, for example, the control circuitry may be adapted to regulate a suitable MIG welding regime. The control circuitry is thus coupled to power conversion circuitry 24. This power conversion circuitry is adapted to create the output power, such as pulsed pulsed waveforms that will ultimately be applied to the welding wire at the torch. Various power conversion circuits may be employed, including choppers, boost circuitry, buck circuitry, inverters, converters, and so forth. The configuration of such circuitry may be of types generally known in the art in and of itself. The power conversion circuitry 24 is coupled to a source of electrical power as indicated by arrow 26. The power applied to the power conversion circuitry 24 may originate in the power grid, although other sources of power may also be used, such as power generated by an engine-driven generator, batteries, fuel cells or other alternative sources. Finally, the power supply illustrated in FIG. 1 includes interface circuitry 28 designed to allow the control circuitry 22 to exchange signals with the wire feeder 12.

The wire feeder 12 includes complimentary interface circuitry 30 that is coupled to the interface circuitry 28. In some embodiments, multi-pin interfaces may be provided on both components and a multi-conductor cable run between the interface circuitry to allow for such information as wire feed speeds, processes, selected currents, voltages or power levels, and so forth to be set on either the power supply 10, the wire feeder 12, or both.

The wire feeder 12 also includes control circuitry 32 coupled to the interface circuitry 30. As described more fully below, the control circuitry 32 allows for wire feed speeds to be controlled in accordance with operator selections, and permits these settings to be fed back to the power supply via the interface circuitry. The control circuitry 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuitry 32 is also coupled to gas control valving 36 which regulates the flow of shielding gas to the torch. In general, such gas is provided at the time of welding, and may be turned on immediately preceding the weld and for a short time following the weld. The gas applied to the gas control valving 36 is typically provided in the form of pressurized bottles, as represented by reference numeral 38.

The wire feeder 12 includes components for feeding wire to the welding torch and thereby to the welding application, under the control of control circuitry 36. For example, one or more spools of welding wire 40 are housed in the wire feeder. Welding wire 42 is unspooled from the spools and is progressively fed to the torch. The spool may be associated with a clutch 44 that disengages the spool when wire is to be fed to the torch. The clutch may also be regulated to maintain a minimum friction level to avoid free spinning of the spool. A feed motor 46 is provided that engages with feed rollers 48 to push wire from the wire feeder towards the torch. In practice, one of the rollers 48 is mechanically coupled to the motor and is rotated by the motor to drive the wire from the wire feeder, while the mating roller is biased towards the wire to maintain good contact between the two rollers and the wire. Some systems may include multiple rollers of this type. Finally, a tachometer 50 may be provided for detecting the speed of the motor 46, the rollers 48, or any other associated component so as to provide an indication of the actual wire feed speed. Signals from the tachometer are fed back to the control circuitry 36, such as for calibration as described below.

It should be noted that other system arrangements and input schemes may also be implemented. For example, the welding wire may be fed from a bulk storage container (e.g., a drum) or from one or more spools outside of the wire feeder. Similarly, the wire may be fed from a "spool gun" in which the spool is mounted on or near the welding torch. As noted herein, the wire feed speed settings may be input via the operator input 34 on the wire feeder or on the operator interface 20 of the power supply, or both. In systems having wire feed speed adjustments on the welding torch, this may be the input used for the setting.

Power from the power supply is applied to the wire, typically by means of a welding cable 52 in a conventional manner. Similarly, shielding gas is fed through the wire feeder and the welding cable 52. During welding operations, the wire is advanced through the welding cable jacket towards the torch 16. Within the torch, an additional pull motor 54 may be provided with an associated drive roller, particularly for aluminum alloy welding wires. The motor 54 is regulated to provide the desired wire feed speed as described more fully below. A trigger switch 56 on the torch provides a signal that is fed back to the wire feeder and therefrom back to the power supply to enable the welding process to be started and stopped by the operator. That is, upon depression of the trigger switch, gas flow is begun, wire is advanced, power is applied to the welding cable 52 and through the torch to the advancing welding wire. Finally, a workpiece cable and clamp 58 allow for closing an electrical circuit from the power supply through the welding torch, the electrode (wire), and the workpiece for maintaining the welding arc during operation.

It should be noted throughout the present discussion that while the wire feed speed may be "set" by the operator, the actual speed commanded by the control circuitry will typically vary during welding for many reasons. For example, automated algorithms for "run in" (initial feed of wire for arc initiation) may use speeds derived from the set speed. Similarly, various ramped increases and decreases in wire feed speed may be commanded during welding. Other welding processes may call for "cratering" phases in which wire feed speed is altered to fill depressions following a weld. Still further, in pulsed welding regimes, the wire feed speed may be altered periodically or cyclically.

It should also be noted, while the above discussion relates generally to manual welding processes, the system of FIG. 1 may also be designed for automated processes. That is, the system components may be associated with various automated equipment for supporting and moving the welding torch, and for initiating, executing and terminating welds. In many applications this would be made by the intermediary of a robot that would be programmed to go to an initial location of a weld, perform the weld, and back away to a rest or home position, or move to the position of a subsequent weld. In both manual and automated welding, moreover, information may be available and collected on various workpieces, welds within any workpiece, and this information may be stored along with weld parameters, such as voltages, currents, wire feed speeds, and as described below, stickout of the electrode.

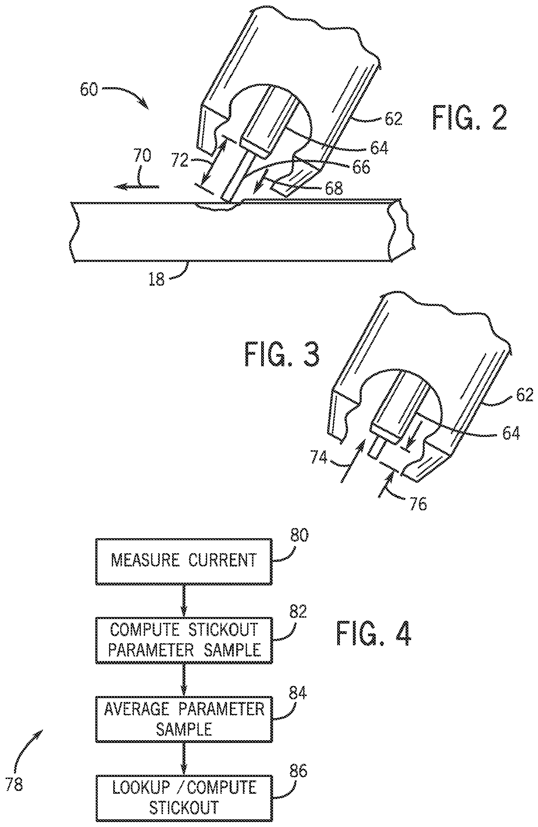

FIG. 2 is a partially broken away view of a portion of a welding torch during a welding operation. The welding torch, indicated generally by reference numeral 60 will typically include a gas nozzle 62 through which shielding gas is channeled during welding. Within the nozzle a contact tip 64 supports the welding electrode or wire 66 and transmits electric current to the electrode for supporting the welding arc. During the welding operation, a welding arc is established between the workpiece 18 and the wire electrode 66, and the wire electrode 66 is continuously advanced at a desired wire feed speed as indicated by arrow 68. At the same time, as the weld advances, the torch (and/or workpiece) is displaced along the direction of the weld as indicated by arrow 70.

To permit distancing the nozzle and contact tip from the progressing weld, a stickout length 72 will typically be afforded, either by manual positioning of the torch (and/or workpiece) or by an automated setting of a robotic apparatus. In either case the torch may be positioned more or less close to the workpiece, such that the electrode stickout length 72 may change. In general, welders and welding engineers designing automated systems will prefer some optimal length of welding electrode to provide the desired penetration, arc heating, melting of the electrode, and so forth. The present techniques allow for determining the stickout length of the electrode, and at least one of monitoring the stickout or controlling system components based upon the stickout.

FIG. 3 illustrates a similar torch with the wire electrode retracted. In certain embodiments of the present techniques, the stickout may be controlled to allow for determination of stickout following a welding operation, and retraction of the electrode following the welding operation as indicated by reference numeral 74. In certain applications, the desired at-rest stickout 76 may be controlled by reference to the stickout following the welding operation. For example, in some implementations, the electrode may be retracted to approximately the level of the nozzle front extremity or slightly within the nozzle to reduce the potential for touching or otherwise contacting the electrode between welding operations.

FIG. 4 illustrates exemplary steps in a process for determining the stickout length. The process indicated generally by reference numeral 78, begins with measuring current, as indicated by reference numeral 80. The current measured at step 80 will typically be the welding current, and will be measured by a current sensor associated with at least one of the welding torch, the wirefeeder, and the welding power supply. Such current measurements are commonly made for various monitoring and control operations. In the present context, however, the current measurement is used to compute stickout as described below. Current measurements are typically made periodically during the welding operation, and many such current measurements are made at pre-determined intervals under the control of processing circuitry as described below.

At step 82, then, based upon these current measurements, a stickout parameter sample is computed. In a presently contemplated embodiment, the sample is computed according to relationships:

If the wire is in a short condition (wire touching the puddle or work):

$$\text{Sample} = I * I * C1 \qquad \text{EQ. 1,}$$

If the wire is in an arc condition:

$$\text{Sample} = I * I * C1 + I * C2 \qquad \text{EQ. 2,}$$

where I represents the measured current, and the parameter C1 is a scaling constant, such as 1600, and C2 is a scaling constant, such as 2150. In this implantation, EQ. 1 generally represents wire heating, while EQ. 2 represents wire heating plus arc heating. Those skilled in the art will appreciate that determination of whether the electrode is in a short circuit condition may be made by reference, for example, to the voltage of the welding power (which will decline precipitously due to the short circuit), and/or the current. In addition to current, other parameters such as power and resistance may also be measured and used in computing stickout.

With the samples computed, in a presently contemplated embodiment multiple samples are averaged as indicated by step 84 in FIG. 4. This averaging allows for smoothing of the samples over time and reduction of noise. In presently contemplated embodiments, for example the samples are averaged over a relatively extended period, on the order of 0.05 to 3 seconds. Additionally, the resistance may be held constant, and the integral of $I^2$ may be calculated and used in computing stickout.

The welding system may be configured for various welding processes, including direct current welding and pulse welding, in which sampling and/or integration is employed to calculate a stickout parameter. In pulse welding processes, the sampling rate is generally greater than the pulse frequency of the welding voltage such that the sampled data is a generally accurate representation of the welding parameter.

It has been determined that the stickout length may be estimated based upon the running average of the parameter sample and the wire feed speed. For example, in a presently contemplated embodiment a look-up table is used, with interpolation, to estimate the stickout length. Specifically, by way of example only, a table of the following type may be used, where a stickout length is indicated in the left-most column (in inches), wire feed speed is indicated in the top row, and the running average of the parameter sample is indicated in the body of the table.

| Stickout | 100IPM | 200IPM | 400IPM | 800IPM | 1000IPM | 1400IPM |
|----------|--------|--------|--------|--------|---------|---------|
| ¼        | 1000   | 1400   | 1500   | 2000   | 2200    | 2250    |
| ¾        | 900    | 1100   | 1350   | 1500   | 1600    | 1650    |
| 1 ¼      | 700    | 900    | 1100   | 1350   | 1400    | 1500    |

In a specific example, for a wirefeed speed of 150 inches per minute (IPM), the table may be used, by interpolating between the 100 IPM and 200 IPM columns, rendering interpolated values as follows:

| Stickout | |
|----------|------|
| ¼        | 1200 |
| ¾        | 1000 |
| 1 ¼      | 800  |

If, in this case, the average parameter sample value is 1100, the stickout length may be interpolated to be between ¼ inches and ¾ inches, with a linear interpolation rendering an estimated stickout of ½ inch. A number of other methods may be devised for estimating or determinating stickout, and the present techniques are not intended to be limited to any particular stickout look-up or computation approach.

The system may be calibrated during manufacture or factory testing to produce such reference look-up tables. Additionally, the system may be calibrated by users at the work site to enhance customization and accuracy of the system. For example, a user may manually measure one or more stickout lengths with the corresponding parameter samples and input the data into the system. Accordingly, the lookup tables may be updated on the fly as this calibration data is inputted. The abovementioned interpolation scheme may likewise be used to calculate stickout in such user calibrated systems.

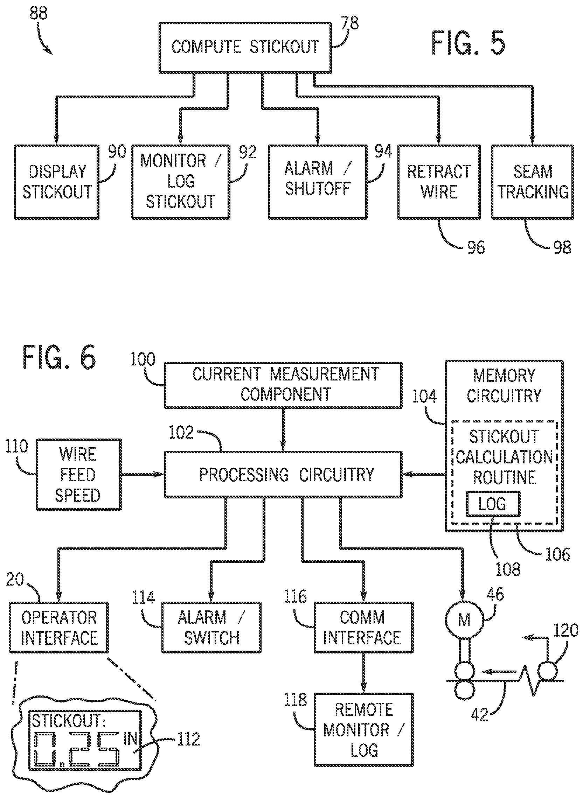

Based upon the estimation of electrode stickout, then, multiple actions may be taken by the power supply, the wirefeeder, the system components, or information may simply be stored for later reference. FIG. 5 illustrates several such scenarios, as indicated generally by reference numeral 88. Thus, following the stickout computation method 78, in one contemplated embodiment, stickout is displayed for the operator as indicated by reference numeral 90. One significant advantage of the present technique is that a unitized value for stickout may be clearly indicated, such as in inches, millimeters, or any other readily-recognized unit of measure. As described below, the stickout may be displayed on the power supply, the wirefeeder, the torch, or any other component of the system that comprises a user-viewable display. Moreover, the stickout may be displayed, in certain cases, within a welding helmet in data communication with any one of these devices.

Still further, as indicated at reference numeral 92, the system simply provide for monitoring and logging of stickout. As will be appreciated by those skilled in the art, such monitoring and logging may be associated with part identifications, specific parts, specific welders, specific systems, and may further reference dates and times, and so forth. Such data may be analyzed or inspected to detect if a certain machine or component is particularly error prone and may require maintenance. Additionally, in the event of a stickout issue, stickout data may also indicate the specific workpiece or part involved such that it can be inspected to ensure quality and weld standard. Such specifications may generally be considered performance of either the welding system or the weld. Accordingly, the system may be configured to may evaluate and store performance of the welding system or a weld based on stickout. This information may be stored on the wirefeeder, on the power supply, or on any other system component connected to these, including both local to the welding system and entirely remote from the welding system.

As indicated at reference numeral 96, the system may be designed to allow for retraction of the welding wire to a desired at-rest stickout length in both manual and automated operations. This would be typically be performed by reversal of the wirefeed motor in the wirefeeder (and/or welding torch). In certain embodiments, the welding wire may not be retracted immediately if another weld is anticipated. As such, retraction may be delayed, stopped, or lessened in order to allow for repetitive welding starts with minimal delay.

Finally, in certain embodiments, particularly those involving automated welding, the system may be further include a seam-tracking application 98, in which the seam-tracking application 98 is capable of detecting the welding status such as beginning and end of the weldline. As such, the system, upon detecting a stickout issue, may initiate seam-tracking to determine the appropriate stickout. The machine may then adjust the stickout accordingly.

FIG. 6 illustrates certain functional components of the welding system described above that may be called upon for carrying out functions such as those outlined in FIG. 5. The stickout-responsive system 98 will typically include a current measurement component 100. In general, this component may comprise of several components which may consist of hardware, firmware and/or software. Specifically, in currently contemplated embodiments this component will include one or more current sensors, sampling circuitry (e.g., analog-to-digital conversion circuitry), current measurement circuitry based upon the analog-to-digital conversion, and so forth. As described above, this component will provide current measurements to processing circuitry 102 that executes one or more routines stored on memory circuitry 104. In a presently contemplated embodiment, the processing circuitry 102 may be the same processing circuitry used to control other aspects of the welding power supply, such as the generation of welding power by the power conversion circuitry. The memory circuitry 104 may be part of the processing circuitry, or may be functionally associated with the processing circuitry in a conventional manner. The memory circuitry will store one or more routines carried out by the processing circuitry, including a stickout calculation routine 106. Here again, the routine may follow any logic capable of estimating or determining stickout based upon measured welding parameter values, and being referred to a look-up table as discussed above. Also, the stickout calculation routine may call upon various other parameters of the welding operation, particularly the wire feed speed 110 which may be the commanded wire feed speed, a fed-back wire feed speed (e.g., from a tachometer or encoder) or any other desired estimation or measurement. Particularly, the memory circuitry 104 may store different programs and look-up tables that correspond to different welding processes, wire types, and other attributes. For example, the memory circuitry 104 may include a different look-up table associated with each wire size, material, or shielding gas. Thus, the user may indicate the specific welding process or wire type they are using, and the appropriate calculation routine 106 and look-up tables may be accessed to provide the appropriate operational instructions.

The processing circuitry 102 may be adapted for interaction with other system components to carry out the stickout-based operations. For example, the operator interface 20 discussed above may include one or more display windows, one of which may be dedicated to or optionally programmable to display a stickout value. As discussed above, this display 112 is conveniently in the form of an easily recognizable unit, such as inches or millimeters.

The processing circuitry 102 may also be designed to operate with alarms and/or switches as indicated by reference numeral 114. Here again, these alarms may be visual alarms, such as lights, but may also include audible alarms producing sound that can be detected by the welding operator or any other operations personnel to alert them to the fact that stickout is beyond desired limits or is beyond variability criterion.

Still further, the processing circuitry 102 may cooperate with communications interface circuitry 116, such as network interface circuitry. Conventional network interface circuitry may be employed, such as for transmitting data between the welding system and remote monitors or logs as indicated by reference numeral 118. Here again, this data may be associated with particular workpiece designs, individual workpieces, individual welds or workpieces, welding operators, automated welding systems, dates, times, or any other useful information for storing and evaluating the quality of welds as a function of the detected stickout.

Finally, the processing circuitry 102 will already be associated with a motor 46 to drive the welding wire 42 to as discussed above. For retraction of the welding wire, the processing circuitry may be capable, directly or through the intermediary of separate drive circuitry (not shown), of commanding the motor 46 to reverse the direction of feed of the welding wire so as to retract the welding wire back into a desired at-rest stickout length. In one presently contemplated embodiment an encoder 120 may be used, such as in the weld and torch or in the wirefeeder to detect the movement of the welding wire back to the at-rest stickout length. Thus, consistent stickout may be offered at the end of each welding operation, and the wire may be maintained at a desired length outside of the contact tip but within the torch nozzle, for example.

While only certain features of the invention have been illustrated and described herein, many modifications and changes will occur to those skilled in the art. It is, therefore, to be understood that the appended claims are intended to cover all such modifications and changes as fall within the scope of the invention.

**Claims**

1.    A welding system comprising:

- a sensor configured to sense a welding parameter;
- processing circuitry (102) configured to determine a length (72) of a stickout of a welding electrode wire (66) from a welding torch (16, 60) based upon the sensed welding parameter, wherein the processing circuitry (102) is configured to evaluate and store an evaluation of a performance of the welding system or a weld based on the length (72) of the stickout; and
- a component (98) configured to control an operation of the welding system based upon the determined length (72) of the stickout,

wherein the sensor comprises a current sensor (100) that detects welding current, and wherein the length (72) of the stickout is determined based upon sensed current, and

wherein the length (72) of the stickout is determined by a first relationship if the welding electrode wire (66) is in a short condition, and by a second relationship if the welding electrode wire (66) is in an arc condition,

**characterized in that**

the processing circuitry (102), in operation, determines the amount of the welding electrode wire (66) to retract based at least in part on the determined length (72) of stickout from the welding torch (16, 60) after welding, the retraction following the welding operation, wherein the welding electrode wire (66) is retracted to approximately the level of the nozzle front extremity or slightly within the nozzle (62) of the welding torch (16, 60); and

wherein the processing circuitry (102) commands the amount of the welding electrode wire (66) to retract after a delay after welding to allow for repetitive welding starts.

2. The system of claim 1, wherein the first relationship is based upon a product of the square of the sensed current and a first multiplier.

3. The system of claim 2, wherein the second relationship is based upon a sum of the product of the square of the sensed current and the first multiplier, and a product of the sensed current and a second multiplier.

4. The system of claim 1, wherein the component (98) comprises a log (118), and the operation comprises log ging length (72) of the stickout during a welding operation.

5. The system of claim 4, wherein the operation comprises associating length (72) of the stickout with at least one other welding parameter.

6. The system of claim 5, wherein the at least one other welding parameter comprises at least one of a workpiece, an operator, a welding system, a date and a time.

7. The system of claim 1, wherein the component (98) comprises an operator perceptible alarm that is displayed or sounded based upon the determined length (72) of the stickout, or

a switch (114) that is controlled to disable welding based upon the determined length (72) of the stickout, or

a display (112) that provides an operator perceptible readout of the length (72) of the stickout in a standardized unit of measure.

8. The system of claim 1, wherein the component (98) comprises a wire feeding motor (46), and the operation comprises retracting the welding electrode wire (66) to a desired at-rest position in the welding torch (16, 60).

9. The system of claim 1, wherein the current is sensed at a first frequency, and the stickout is determined based upon stored current values at a second, different frequency.

10. A welding method comprising:

- sensing welding current during welding;
- determining, based upon the welding current, length (72) of a stickout of a welding electrode wire (66) from a welding torch (16, 60) based upon the sensed welding current;
- logging the length (72) of the stickout during welding and/or controlling an operation of the welding system based upon the determined length (72) of the stickout by a component (98); and
- evaluating and storing an evaluation of a performance of the welding - system or a weld based on the length (72) of the stickout, and

wherein the length (72) of the stickout is determined by a first relationship if the welding electrode wire (66) is in a short condition, and by a second relationship if the welding electrode wire (66) is in an arc condition,

**characterized by**

determining the amount of the welding electrode wire (66) to retract based at least in part on the determined length (72) of stickout from the welding torch (16, 60) after welding, the retraction following the welding operation, wherein the welding electrode wire (66) is retracted to approximately the level of the nozzle front extremity or slightly within the nozzle (62) of the welding torch (16, 60); and

retracting the amount of the welding electrode wire (66) after a delay after welding to allow for repetitive welding starts.

11. The method of claim 10, wherein the operation comprises logging and associating the length (72) of the stickout with at least one of a workpiece, an operator, a welding system, a date and a time.

12. The method of claim 10, wherein the component (98) comprises an operator perceptible alarm that is displayed or sounded based upon the determined length (72) of the stickout, or
a switch (114) that is controlled to disable welding based upon the determined length (72) of the stickout, or
a display (112) that provides an operator perceptible readout of stickout in a standardized unit of measure.

13. The method of claim 10, wherein the component (98) comprises a wire feeding motor (46), and the operation comprises retracting the welding electrode wire (66) to a desired at-rest position in the welding torch (16, 60).

**Patentansprüche**

1. Schweißsystem, umfassend:

   - einen Sensor, der konfiguriert ist, um einen Schweißparameter abzufühlen;
   - Verarbeitungsschaltung(en) (102), die konfiguriert ist bzw. sind, um eine Länge (72) einer freien Drahtlänge eines Schweißelektrodendrahts (66) von einem Schweißbrenner (16, 60) basierend auf dem abgefühlten Schweißparameter zu ermitteln, wobei die Verarbeitungsschaltung(en) (102) konfiguriert ist bzw. sind, um eine Auswertung einer Leistung des Schweißsystems oder einer Schweißung basierend auf der Länge (72) der freien Drahtlänge auszuwerten und zu speichern; und
   - eine Komponente (98), die konfiguriert ist, um einen Betrieb des Schweißsystems basierend auf der ermittelten Länge (72) der freien Drahtlänge zu steuern,

   wobei der Sensor einen Stromsensor (100) umfasst, der Schweißstrom detektiert, und wobei die Länge (72) der freien Drahtlänge basierend auf dem abgefühlten Strom ermittelt wird, und
   wobei die Länge (72) der freien Drahtlänge durch eine erste Beziehung ermittelt wird, falls der Schweißelektrodendraht (66) in einem Kurzschlusszustand ist, und durch eine zweite Beziehung, falls der Schweißelektrodendraht (66) in einem Lichtbogenzustand ist, **dadurch gekennzeichnet, dass**
   die Verarbeitungsschaltung(en) (102) im Betrieb basierend mindestens teilweise auf der ermittelten Länge (72) der freien Drahtlänge aus dem Schweißbrenner (16, 60) nach dem Schweißen die Menge des Schweißelektrodendrahts (66) ermittelt bzw. ermitteln, die zurückgezogen werden soll, wobei das Zurückziehen dem Schweißvorgang folgt, wobei der Schweißelektrodendraht (66) auf ungefähr die Höhe des vorderen äußersten Endes der Düse oder geringfügig innerhalb der Düse (62) des Schweißbrenners (16, 60) zurückgezogen wird; und
   wobei die Verarbeitungsschaltung(en) (102) die Menge des Schweißelektrodendrahts (66) angibt bzw. angeben, die nach einer Verzögerung nach dem Schweißen zurückgezogen werden soll, um wiederholte Schweißstarts zu ermöglichen.

2. System nach Anspruch 1, wobei die erste Beziehung auf einem Produkt des Quadrats aus dem abgefühlten Strom und einem ersten Multiplikator basiert.

3. System nach Anspruch 2, wobei die zweite Beziehung auf einer Summe des Produkts des Quadrates des abgefühlten Stroms und des ersten Multiplikators und einem Produkt des abgefühlten Stroms und eines zweiten Multiplikators basiert.

4. System nach Anspruch 1, wobei die Komponente (98) ein Protokoll (118) umfasst, und der Vorgang Protokollieren der Länge (72) der freien Drahtlänge während eines Schweißvorgangs umfasst.

5. System nach Anspruch 4, wobei der Vorgang Verknüpfen der Länge (72) der freien Drahtlänge mit mindestens einem anderen Schweißparameter umfasst.

6. System nach Anspruch 5, wobei der mindestens eine andere Schweißparameter mindestens eines von einem Werkstück, einer Bedienungsperson, einem Schweißsystem, einem Datum und einer Zeit umfasst.

7. System nach Anspruch 1, wobei die Komponente (98) einen von einer Bedienungsperson wahrnehmbaren Alarm, der basierend auf der ermittelten Länge (72) der freien Drahtlänge angezeigt wird oder erklingt, oder einen Schalter (114), der gesteuert wird, um das Schweißen basierend auf der ermittelten Länge (72) des freien Drahtendes zu deaktivieren, oder

eine Anzeige (112) umfasst, die einer Bedienungsperson eine wahrnehmbare Ablesung der Länge (72) des freien Drahtendes in einer standardisierten Maßeinheit bereitstellt.

8. System nach Anspruch 1, wobei die Komponente (98) einen Drahtzuführungsmotor (46) umfasst, und der Vorgang Zurückziehen des Schweißelektrodendrahts (66) in eine gewünschte Ruheposition in dem Schweißbrenner (16, 60) umfasst.

9. System nach Anspruch 1, wobei der Strom mit einer ersten Häufigkeit abgefühlt wird und die freie Drahtlänge basierend auf gespeicherten Stromwerten mit einer zweiten anderen Häufigkeit ermittelt wird.

10. Schweißverfahren, umfassend:

  - Abfühlen des Schweißstroms während des Schweißens;
  - auf dem Schweißstrom basierendes Ermitteln der Länge (72) einer freien Drahtlänge eines Schweißelektrodendrahts (66) aus einem Schweißbrenner (16, 60) basierend auf dem abgefühlten Schweißstrom;
  - Protokollieren der Länge (72) der freien Drahtlänge während des Schweißens und/oder Steuern eines Betriebs des Schweißsystems basierend auf der ermittelten Länge (72) der freien Drahtlänge durch eine Komponente (98); und
  - Auswerten und Speichern einer Auswertung einer Leistung des Schweißsystems oder einer Schweißung basierend auf der Länge (72) der freien Drahtlänge, und

  wobei die Länge (72) der freien Drahtlänge durch eine erste Beziehung ermittelt wird, falls der Schweißelektrodendraht (66) in einem Kurzschlusszustand ist, und durch eine zweite Beziehung, falls der Schweißelektrodendraht (66) in einem Lichtbogenzustand ist, **gekennzeichnet durch** Ermitteln der Menge des Schweißelektrodendrahts (66), die zurückgezogen werden soll, mindestens teilweise basierend auf der ermittelten Länge (72) der freien Drahtlänge aus dem Schweißbrenner (16, 60) nach dem Schweißen, wobei das Zurückziehen dem Schweißvorgang folgt, wobei der Schweißelektrodendraht (66) auf ungefähr die Höhe des vorderen äußersten Endes der Düse oder geringfügig innerhalb der Düse (62) des Schweißbrenners (16, 60) zurückgezogen wird; und Zurückziehen der Menge des Schweißelektrodendrahts (66) nach einer Verzögerung nach dem Schweißen, um wiederholte Schweißstarts zu ermöglichen.

11. Verfahren nach Anspruch 10, wobei der Vorgang Protokollieren der Länge und Verknüpfen der Länge (72) der freien Drahtlänge mit mindestens einem von einem Werkstück, einer Bedienungsperson, einem Schweißsystem, einem Datum und einer Zeit umfasst.

12. Verfahren nach Anspruch 10, wobei die Komponente (98) einen von einer Bedienungsperson wahrnehmbaren Alarm, der basierend auf der ermittelten Länge (72) der freien Drahtlänge angezeigt wird oder erklingt, oder einen Schalter (114), der gesteuert wird, um das Schweißen basierend auf der ermittelten Länge (72) des freien Drahtendes zu deaktivieren, oder eine Anzeige (112) umfasst, die eine von einer Bedienungsperson wahrnehmbare Ablesung der Länge des freien Drahtendes in einer standardisierten Maßeinheit bereitstellt.

13. Verfahren nach Anspruch 10, wobei die Komponente (98) einen Drahtzuführungsmotor (46) umfasst, und der Vorgang Zurückziehen des Schweißelektrodendrahts (66) in eine gewünschte Ruheposition in dem Schweißbrenner (16, 60) umfasst.

**Revendications**

1. Système de soudage comprenant :

  - un capteur conçu pour détecter un paramètre de soudage ;
  - des circuits de traitement (102) conçus pour déterminer une longueur (72) d'une longueur libre de fil d'un fil d'électrode de soudage (66) à partir d'un chalumeau (16, 60) sur la base du paramètre de soudage détecté, les circuits de traitement (102) étant conçus pour évaluer et mémoriser une évaluation d'une performance du système de soudage ou d'une soudure sur la base de la longueur (72) de la longueur libre de fil ; et
  - un composant (98) conçu pour commander une opération du système de soudage sur la base de la longueur (72) déterminée de la longueur libre de fil,

dans lequel le capteur comprend un capteur de courant (100) qui détecte le courant de soudage, et dans lequel la longueur (72) de la longueur libre de fil est déterminée sur la base du courant détecté, et

dans lequel la longueur (72) de la longueur libre de fil est déterminée par une première relation si le fil d'électrode de soudage (66) est dans un état court, et par une seconde relation si le fil d'électrode de soudage (66) est dans un état d'arc,

**caractérisé en ce que**

les circuits de traitement (102), pendant le fonctionnement, déterminent la quantité du fil d'électrode de soudage (66) à rétracter sur la base au moins en partie de la longueur (72) déterminée de la longueur libre de fil à partir du chalumeau (16, 60) après le soudage, la rétraction suivant l'opération de soudage, le fil d'électrode de soudage (66) étant rétracté approximativement au niveau de l'extrémité avant de buse ou légèrement dans la buse (62) du chalumeau (16, 60) ; et

dans lequel les circuits de traitement (102) commandent la quantité du fil d'électrode de soudage (66) à rétracter après un retard après le soudage pour permettre des démarrages de soudage répétitifs.

2. Système selon la revendication 1, dans lequel la première relation est basée sur un produit du carré du courant détecté et d'un premier multiplicateur.

3. Système selon la revendication 2, dans lequel la seconde relation est basée sur une somme du produit du carré du courant détecté et du premier multiplicateur, et d'un produit du courant détecté et d'un second multiplicateur.

4. Système selon la revendication 1, dans lequel le composant (98) comprend un journal (118), et l'opération consiste à journaliser la longueur (72) de la longueur libre de fil pendant une opération de soudage.

5. Système selon la revendication 4, dans lequel l'opération consiste à associer la longueur (72) de la longueur libre de fil avec au moins un autre paramètre de soudage.

6. Système selon la revendication 5, dans lequel au moins un autre paramètre de soudage comprend une pièce à travailler et/ou un opérateur et/ou un système de soudage et/ou une date et une heure.

7. Système selon la revendication 1, dans lequel le composant (98) comprend une alarme perceptible par un opérateur qui est affichée ou qui retentit sur la base de la longueur (72) déterminée de la longueur libre de fil, ou

un commutateur (114) qui est commandé pour désactiver le soudage sur la base de la longueur (72) déterminée de la longueur libre de fil, ou

un affichage (112) qui fournit un résultat perceptible par un opérateur de la longueur (72) de la longueur libre de fil dans une unité de mesure normalisée.

8. Système selon la revendication 1, dans lequel le composant (98) comprend un moteur (46) d'alimentation en fil, et l'opération consiste à rétracter le fil d'électrode de soudage (66) vers une position de repos souhaitée dans le chalumeau (16, 60).

9. Système selon la revendication 1, dans lequel le courant est détecté à une première fréquence, et la longueur de sortie de fil est déterminée sur la base de valeurs de courant mémorisées à une seconde fréquence différente.

10. Procédé de soudage consistant à :

  - détecter un courant de soudage pendant le soudage ;
  - déterminer, sur la base du courant de soudage, la longueur (72) d'une longueur libre de fil d'un fil d'électrode de soudage (66) à partir d'un chalumeau (16, 60) sur la base du courant de soudage détecté ;
  - journaliser la longueur (72) de la longueur libre de fil pendant le soudage et/ou commander une opération du système de soudage sur la base de la longueur (72) déterminée de la longueur libre de fil par un composant (98) ; et
  - évaluer et mémoriser une évaluation d'une performance du système de soudage ou d'une soudure sur la base de la longueur (72) de la longueur libre de fil, et

dans lequel la longueur (72) de la longueur libre de fil est déterminée par une première relation si le fil d'électrode de soudage (66) est dans un état court, et par une seconde relation si le fil d'électrode de soudage (66) est dans un état d'arc,

**caractérisé par**

la détermination de la quantité du fil d'électrode de soudage (66) à rétracter sur la base au moins en partie de la longueur (72) déterminée de la longueur libre de fil à partir du chalumeau (16, 60) après le soudage, la rétraction suivant l'opération de soudage, le fil d'électrode de soudage (66) étant rétracté approximativement au niveau de l'extrémité avant de buse ou légèrement dans la buse (62) du chalumeau (16, 60) ; et

la rétraction de la quantité du fil d'électrode de soudage (66) après un retard après le soudage pour permettre des démarrages de soudage répétitifs.

11. Procédé selon la revendication 10, dans lequel l'opération consiste à journaliser et associer la longueur (72) de la longueur libre de fil avec une pièce à travailler et/ou un opérateur et/ou un système de soudage et/ou une date et une heure.

12. Procédé selon la revendication 10, dans lequel le composant (98) comprend une alarme perceptible par un opérateur qui est affichée ou qui retentit sur la base de la longueur (72) déterminée de la longueur de sortie de fil, ou

un commutateur (114) qui est commandé pour désactiver le soudage sur la base de la longueur (72) déterminée de la longueur libre de fil, ou

un affichage (112) qui fournit un résultat perceptible par un opérateur de la longueur libre de fil dans une unité de mesure normalisée.

13. Procédé selon la revendication 10, dans lequel le composant (98) comprend un moteur (46) d'alimentation en fil, et l'opération consiste à rétracter le fil d'électrode de soudage (66) vers une position de repos souhaitée dans le chalumeau (16, 60).

FIG. 1

FIG. 2

FIG. 3

MEASURE CURRENT 80

COMPUTE STICKOUT PARAMETER SAMPLE 82

AVERAGE PARAMETER SAMPLE 84

LOOKUP /COMPUTE STICKOUT 86

FIG. 4

78

14

## FIG. 5

88

COMPUTE STICKOUT 78

DISPLAY STICKOUT 90

MONITOR / LOG STICKOUT 92

ALARM / SHUTOFF 94

RETRACT WIRE 96

SEAM TRACKING 98

## FIG. 6

CURRENT MEASUREMENT COMPONENT 100

MEMORY CIRCUITRY 104

STICKOUT CALCULATION ROUTINE 106

LOG 108

WIRE FEED SPEED 110

PROCESSING CIRCUITRY 102

OPERATOR INTERFACE 20

STICKOUT: 0.25 IN 112

ALARM / SWITCH 114

COMM INTERFACE 116

REMOTE MONITOR / LOG 118

M 46

120

42

**EP 2 691 204 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1036627 A2